(19) **Europäisches Patentamt**

**European Patent Office**

**Office européen des brevets**

(11) **EP 0 719 718 B2**

(12) **NEW EUROPEAN PATENT SPECIFICATION**

(45) Date of publication and mention
of the opposition decision:
**14.01.2004 Bulletin 2004/03**

(45) Mention of the grant of the patent:
**20.10.1999 Bulletin 1999/42**

(21) Application number: **95309445.5**

(22) Date of filing: **27.12.1995**

(51) Int Cl.⁷: **B65G 15/42**

(54) **Toothed conveying belt**

Zahnförderband

Bande transporteuse dentée

(84) Designated Contracting States:
**DE FR GB**

(30) Priority: **28.12.1994 JP 34026394**
**30.10.1995 JP 30691995**

(43) Date of publication of application:
**03.07.1996 Bulletin 1996/27**

(73) Proprietor: **MITSUBOSHI BELTING LTD.**
**Nagata-ku Kobe City Hyogo, pref. (JP)**

(72) Inventors:
 • **Fujita, Yoshihisa**
  **Kobe, Hyogo (JP)**
 • **Mizuno, Takahide**
  **Kobe, Hyogo (JP)**
 • **Nishio, Hiroyuki**
  **Kobe, Hyogo (JP)**
 • **Uto, Kuniharu**
  **Kobe, Hyogo (JP)**

 • **Ishida, Kazutoshi**
  **Kobe, Hyogo (JP)**

(74) Representative: **Croston, David et al**
  **Withers & Rogers,**
  **Goldings House,**
  **2 Hays Lane**
  **London SE1 2HW (GB)**

(56) References cited:
  **WO-A-93/15141**      **US-A- 3 736 805**
  **US-A- 4 302 197**     **US-A- 4 705 161**
  **US-A- 5 141 101**

 • **PATENT ABSTRACTS OF JAPAN vol. 13, no. 65 (M-797), 14 February 1989 & JP 63 266246 A (MITSUBOSHI BELTING), 2 November 1988,**
 • **PATENT ABSTRACTS OF JAPAN vol. 17, no. 660 (M-1522), 7 December 1993 & JP 05 215186 A (MITSUBOSHI BELTING), 24 August 1993,**

**Description**

Background of the Invention

Field of the Invention

This invention relates to endless, toothed belts, and, more particularly, to a toothed belt used to frictionally convey flat objects, such as paper money, cards, tickets, and the like.

Background Art

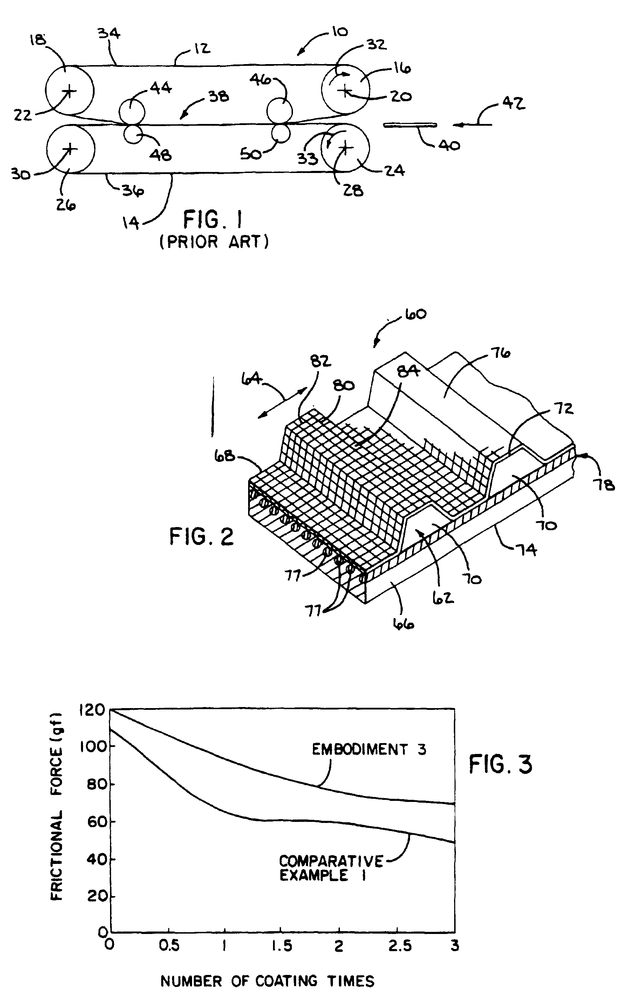

A prior art system for conveying thin articles, such as paper money, cards, tickets, etc. is shown at 10 in Fig. 1. The conveying system 10 includes cooperating, endless toothed belts 12, 14, each having a similar construction. The belt 12 is trained around spaced drive and driven pulleys 16, 18, respectively, which pulleys 16, 18 have parallel rotational axes 20, 22. The belt 14 is trained around drive and driven pulleys 24, 26, which pulleys 24, 26 are rotatable about axes 28, 30, that are parallel to each other and the axes 20, 22 associated with the belt 12. The drive pulley 16 rotates in the direction of the arrow 32, with the drive pulley 24 rotating in the direction of the arrow 34.

The belts 12, 14 are arranged so that outside conveying surfaces 34, 36 on the belts 12, 14 are in contact over a substantial length thereof at the region 38. An article 40 to be conveyed, which article 40 may be paper money, cards, tickets, or the like, is advanced between the belts 12, 14 in the direction of the arrow 42. The article 40 is frictionally driven by the belt surfaces 34, 36 from right to left in Fig. 1 with the belts 12, 14 advancing as previously described. Spaced pressing rollers 44, 46 are selectively movable downwardly in Fig. 1 against the inside of the belt 12 at the region 38 to thereby deform and press the belt 12 towards backing rollers 48, 50, aligned with the pressing rollers 44, 46 and acting against the belt 14, to vary the pressing force between the belt surfaces 34, 36 at the region 38.

Ideally, the coefficient of friction between the article 40 and belt surfaces 34, 36 remains relatively constant through significant temperature variations, preferably in the range of -20° C. to 60° C. Still further, it is desirable that the flexibility and wear resistance of the belts 12, 14 do not significantly change with the belts 12, 14 operating within this temperature range. It is also important that the belts 12, 14 do not stain the articles 40 which are conveyed thereby.

It is known to construct toothed belts, such as those 12, 14, disclosed in Fig. 1, using chloroprene rubber. These belts have a plurality of regularly spaced teeth on an inside surface and an outside part within which load carrying cords are embedded.

It is also known to place a cloth covering over the surface of the teeth on this type of belt. One known cloth layer has a warp and a weft with the weft being defined by crimped 6 nylon or 6,6 nylon. The warp is an uncrimped thread of 6 nylon or 6,6 nylon, preferably with the same composition as the weft.

It is also known to enhance the adherence of the cloth to the belt teeth by using an adhesion treatment with a resorcin-formalin-latex solution (RFL). This solution is applied to the rubber using a soaking or a spreading treatment process.

Even when a chloroprene rubber which does not readily crystallize at low temperatures is used, when the chloroprene rubber is used alone, a decrease in the frictional coefficient between the belt and the articles to be conveyed may result at low temperatures. To compensate for this, the gripping force between the belts 12, 14 has been increased by deforming the belt through the pressing rollers 44, 46.

By urging the pressing rollers 44, 46 against the belt 12, the tension thereon increases. As a result, the surfaces 34, 36 become more prone to wear. Further, load carrying cords within the belt 12 tend to stretch. Adjustment of the belt tension through change in the spacing between the pulleys 16, 18 may then be necessary, possibly on a frequent basis. To accommodate this adjustment, the pulleys and supporting structure therefor have to be made strong and durable, which potentially increases the complexity and the cost of the overall system.

Another problem with conventional, toothed conveying belts is that the rubber underlying the cloth covering layer is commonly exposed through openings defined between the warp and weft of the cloth layer. The pulleys 16, 18, 24, 26 may directly contact the rubber on the belts 12, 14 through these openings, and as a result abrade the rubber to produce rubber dust particles. This rubber dust may migrate between the belts 12, 14 in the region 38 and may contact and stain the articles 40 that are conveyed. WO93/15141 discloses a compatibilized rubber composition comprising a blend of an ethylene/acrylate/acrylic acid terpolymer with two or more different rubbers from the group including EPR, EPDM, CR, NBR, SBR and NR.

Summary of the Invention

One object of the present invention is to maintain an acceptable coefficient of friction between an article to be conveyed and the inventive conveying belt through a wide temperature range without the need to deform, and apply excessive forces to, the belt, as through a pressing roller. Ideally, an acceptable coefficient of friction and flexibility are maintained through the temperature range anticipated in the environment in which the belt is used. Another object of the invention is to minimize abrasion of the belt rubber resulting from direct contact between pulleys, that drive or are driven by the inventive belt, as would cause dislodging of rubber dust as might contact and stain articles as they are conveyed. Another object of the invention is to provide a conveying belt with good ozone resistance and which conveys articles effectively even when the articles have deposits of oil water thereon. Some or all of these objectives may be achieved using the inventive structure, described below.

According to the invention there is provided a toothed belt comprising:

a body having a length, laterally spaced sides, an inside and an outside, and defining a plurality of teeth spaced in a lengthwise direction on one of the inside and the outside of the body,

said body defined at least in part by a rubber composition comprising at least an ethylene proplyene diene monomer (EPDM) and a diene rubber, comprising at least one of a) natural rubber, b) BR (butadiene rubber), and c) SBR (styrene butadiene rubber), and

a cloth layer on the teeth on the one of the inside and outside of the body, said cloth layer being treated with a resorcin-formalin-latex solution.

This rubber composition has demonstrated the ability to maintain a relatively constant coefficient of friction between the belt and paper articles conveyed thereby through a substantial temperature range.

The invention also contemplates the toothed belt in combination with a pulley to engage the teeth. The one of the inside and outside of the body may be defined by rubber, with the cloth layer preventing direct contact between the pulley and the rubber on the one of the inside and the outside of the body.

By substantially preventing direct contact between pulleys and the rubber in the teeth, abrasion, as might break loose rubber dust, is minimized. Consequently, the quantity of rubber dust that might contact the conveyed articles is reduced to an acceptable level to thereby minimize staining of the conveying articles.

In one form, the cloth layer is treated with only a resorcin-formalin-latex solution.

A plurality of load carrying cords may be embedded in the body.

In one form, the body has an outside part in which the load carrying cords are embedded and the outside part and teeth both are made at least partially from the above rubber composition.

The invention further comtemplates the toothed belt in combination with a second toothed belt of similar construction. The two belts are each mounted for movement in endless paths wherein the other of the inside and outside of the bodies on the two belts are in close proximity to frictionally convey a flat object therebetween.

In one form, the rubber composition includes ethylidene norbornane, with the EPDM having an iodine value of at least 10, and more preferably 15, and still more preferably 20.

The rubber composition may be formed using a compounding agent that is at least one of a) carbon black, b) zinc white, c) stearic acid, d) a plasticizer, and e) an antioxidant.

The rubber composition may be formed using a vulcanizing agent that is at least one of sulfur and an organic peroxide.

The rubber composition may include 20-70 weight parts of EPDM, and more preferably 25-50 weight parts of EPDM.

The cloth layer may have 30-50 weight percent of solid resorcin-formalin-latex solution.

In one form, the cloth layer is defined by at least one of a) 6 nylon, b) 6,6 nylon, c) polyester, and d) aramid fiber.

The cloth layer has a warp and a weft, and in one form both the warp and weft are defined by at least one of a filament thread and a spun thread.

The weft may be defined by at least one of woolie nylon thread and urethane elastic thread.

The cloth layer may be one of a plain weave, twill weave, and satin weave.

In one form, the load carrying cords are defined by 5-9 filaments of at least one of E glass and high strength glass treated with a protective agent.

The protective agent may be at least one of a rubber composition and an RFL solution.

The load carrying cords may alternatively be twisted 0.5-2.5 denier filaments of para aramid fiber treated with an adhesive defined by at least one of a) an RFL solution, b) an epoxy solution, and c) an isocyanate solution with a rubber composition.

Brief Description of the Drawings

Fig. 1 is a schematic, side elevation view of a prior art system used to convey flat articles through the use of a cooperating pair of toothed, endless conveying belts;

Fig. 2 is a fragmentary, perspective view of a toothed belt, according to the present invention, useable in a system such as that shown in Fig. 1; and

Fig. 3 is a graph of the number of oil coating times on a conveying article versus frictional force generated between the article and belts made according to the present invention and according to the prior art.

Detailed Description of the Drawings

In Fig. 2, a toothed conveying belt, according to the present invention, is shown at 60. The conveying belt 60 is useable as one of two cooperating belts in a system such as that 10 shown in Fig. 1, described in the Background Art section, above. The belt 60 has a body 62 extending in a lengthwise direction, as identified by the arrow 64. The body 62 has laterally spaced sides 66, 68 and a plurality of teeth 70 spaced regularly along the length of the body 62 on the inside thereof. The body 62 has an inside surface 72 and an outside, conveying surface 74, which surface 74 engages the articles 40 to be advanced. The inside surface 72 is covered with a cloth layer 76. For longitudinal reinforcement, a plurality of load carrying cords 77 are embedded in an outside part 78 of the body 62.

A rubber composition defines the belt teeth 70 and the outside belt part 78. The rubber composition is made up of at least an ethylene propylene diene monomer (EPDM) and a diene rubber. Preferably, the EPDM is present in the composition in an amount of 20-70 weight parts, and more preferably 25-50 weight parts.

It has been found that when the EPDM is present in an amount less than 20 weight parts, the resistance of the rubber composition to ozone is detrimentally reduced. When the amount of EPDM exceeds 70 weight parts, the adherence of the rubber composition to the cloth layer 76 and the load carrying cords 77 is detrimentally diminished. The wear resistance of the rubber composition also diminishes as a result of which the belt life may be significantly reduced.

In a preferred form, the iodine value in the EPDM is at least 10, and preferably over 15, and more preferably over 20.

In a preferred form, it is desirable to co-vulcanize with the diene rubber a third component that is ethylidene norbornane. Ethylidene norbornane has a high vulcanizing rate.

The diene rubber in the rubber composition is at least one of natural rubber, BR (butadiene rubber), SBR (styrene butadiene rubber), NBR (nitrile rubber), HNBR (hydrogenated nitrile rubber) having unsaturated parts, chloroprene rubber, and the like. In one preferred form, the rubber composition is made by blending three types of rubber - a) EPDM, b)SBR and c) one of NR or BR. More preferably, the rubber composition is made by blending EPDM, SBR and BR.

A compounding agent may be used in the rubber composition, which compounding agent may be at least one of carbon black, zinc white, stearic acid, a phasticizer, an antioxidant, and the like. Vulcanizing agents, such as sulfur and an organic peroxide may also be used. The above examples of the compounding agents and vulcanizing agents should not be viewed as limiting.

Load carrying cords 77 may be made by twisting together 5-9 bundled filaments of E glass or a high strength glass and treating the bundled filaments with a protective agent. The protective agent may be a rubber composition or RFL solution, which is an adhesive, or the like,

Alternatively, a cord 77 can be made by twisting together and treating 0.5-2.5 denier filaments of para aramid fiber having good resistance to stretching under high stress and tension. Suitable aramid fibers are available commercially and sold under the trademarks KEVLAR™ and TECHNORA™. Adhesive treating of these cords may be effected using an RFL solution, an epoxy solution, and an isocyanate solution, with a rubber composition. The nature of the cords and the treating solution, described above, should not be viewed as limiting.

The cloth layer 76 is preferably a canvas made from at least one of 6 nylon, 6,6 nylon, polyester, aramid fber, or the like. The cloth layer 76 is defined by a warp 80, extending widthwise of the belt, and a weft 82, extending lengthwise of the belt. The warp and weft 80, 82 could each be a filament thread or spun thread made from the fibers, described above for the load carrying cords. For the weft 82, use of woolie nylon thread having good extendability, urethane elastic thread, or a twisted mixture of urethane elastic thread and nylon, is preferred.

The cloth 76 may be plain woven, twill woven, or satin woven.

In a plain woven cloth layer 76, the warp 80 and weft 82 are alternatingly crossed at every intersection in a wave form arrangement. With twill woven or satin woven cloth, the cross over does not occur at every intersection of the warp 80 and weft 82. As a result, there are fewer wave form intersections than with a plain woven cloth, so that the rubber defining the body 62 effectively penetrates between the warp 80 and weft 82 at points of cross over. Direct contact between the warp 80 and weft 82 is reduced, as a result of which belt life may be enhanced.

The cloth layer 76 is preferably treated only with an RFL (resorcin-formalin-latex) solution. The amount of solid, adhered, RFL solution obtained after drying is preferably 30-50 weight percent.

The RFL solid solution is made up of solid RF and latex resin. The resulting amount of solid adhered RFL solution on the cloth layer 76 can be determined by the following formula:

$$\text{(Cloth layer weight after treatment - cloth layer weight}$$

$$\text{before treatment) / (cloth layer weight before treatment) x 100 (\%)}$$

The RFL solution is an initial condensate of resorcin and formalin mixed in latex, with the mole ratio of the resorcin and the formalin being 1 to 1 to 3. The weight percent ratio of the initial condensate of resorcin and formalin and the latex is 1 to 1 to 10.

The latex used is at least one of styrene-butadiene-vinylpyridine ternary copolymer, hydrogenated nitrile rubber, chlorosulfonated polyethylene and epichlorohydrine.

The cloth 76 is treated preferably as follows. The cloth 76 is immersed in the RFL solution using a dip treatment performed by squeezing the cloth 76 between a pair of rollers at a squeezing pressure of approximately 0.3 to 0.8 kgf/cm (gauge pressure). The cloth 76 is then dried. Additional RFL solution treatment is carried out until the solid adhered amount of RFL solution is 30 to 50 weight percent.

It has been found that when the RFL solution is less than 30 weight percent, the contacting portions of the warp 80 and weft 82 on the cloth 76 tend to move to expand the openings 84 bounded by the warp 80 and weft 82. The openings 84 between the warp 80 and weft 82 tend to expand, as a result of which the rubber surface 72 becomes exposed, and liable to be contacted directly by, the pulleys 16, 18, 24, 26, around which the belt 60 is trained and driven. On the other hand, when the solid adhered amount of RFL solution exceeds 50 weight percent, the teeth 70 lose their original, desired shape.

The performance of the inventive belt will now be described through testing procedures comparing specific embodiments of the inventive belt and conventional belts.

Inventive Embodiments 1-6

A twill weave canvas cloth was made with a warp density of 180 threads/5 cm and a weft density of 160 threads/5 cm. The warp consisted of 140 denier 6,6 nylon. The weft consisted of 280 denier 6,6 nylon and 140 denier urethane elastic thread. The cloth was vibrated in water and contracted to about one half of its width at the time of weaving. The resulting cloth was then immersed in the RFL solution shown in Table 1, below, and squeezed by a pair of rollers at 0.5 kgf/cm (gauge pressure). The cloth was then dried and reimmersed in the same RFL solution, squeezed using the same squeezing pressure, dried, and finally completed with the solid adhered amount of RFL solution at 40 weight percent.

TABLE 1

| RFL Ingredients | Weight Parts |
|---|---|
| Resorcin | 10.0 |
| Formalin (37%) | 15.0 |
| Caustic soda | 1.0 |
| Latex | |
| VP latex 40% | 400 |
| CR latex 50% | 400 |
| Water | 1000.0 |
| Total | 1826.0 |

The load carrying cords were ECG-150-3/0 cords made by forming strands using bundled glass fiber filaments of 9μm diameter. The strands were then immersed in an RFL solution and dried for 2 minutes at 250° C., and then gathered into groups of 3 strands and twisted at 4.0 turns per 10 cm.

The resulting cloth was formed into an endless cylindrical body and was set in a metal mold An S, Z pair of glass fiber cords was then wound thereon at a tension of 0.9 kg/cord so as to be disposed alternately at a pitch of 0.5 mm. A rolled sheet, made of the rubber composition in Table 2, below, was then applied. After vulcanizing through an ordinary press-in vulcanizing method, the vulcanized sleeve was cut to a predetermined width and individual belts formed therefrom.

TABLE 2

| Compounding Agents | Embodiment | | | | | | |
|---|---|---|---|---|---|---|---|
| | 1 | 2 | 3 | 4 | 5 | 6 | 7 |
| EPDM | 30 | 30 | 30 | 30 | 30 | 30 | 30 |
| Natural rubber | 40 | 40 | - | 70 | - | - | 30 |
| SBR 1502 | 30 | 30 | 30 | - | 70 | - | 20 |
| BR | - | - | 30 | - | - | 70 | 20 |
| Zinc white | 5 | 5 | 5 | 5 | 5 | 5 | 5 |
| Stearic acid | 1 | 1 | 1 | 1 | 1 | 1 | 1 |
| Carbon black FEF | 40 | - | - | - | - | - | - |
| Acetylene black | - | 40 | 40 | 40 | 40 | 40 | 40 |
| Naphthene oil | 15 | 15 | 15 | 15 | 15 | 15 | 15 |
| Vulcanization accelerator MBTS | 1.0 | 1.0 | 1.0 | 1.0 | 1.0 | 1.0 | 1.0 |
| Vulcanization accelerator TMTD | 0.5 | 0.5 | 0.5 | 0.5 | 0.5 | 0.5 | 0.5 |
| Sulfur | 2 | 2 | 2 | 2 | 2 | 2 | 2 |

The resulting belts were STPD type, with 140 teeth, a width of 6.4 mm, and a tooth pitch of 1.5 mm.

It was found that the shape of the belt teeth after molding was precise, with there being substantially no rubber exposed through the openings in the canvas cloth at the surface of the belt teeth.

Testing

To evaluate the characteristics of the belts, various tests were performed, as summarized in Table 3, below, and explained in detail thereafter.

TABLE 3

| | Embodiment | | | | | | |
|---|---|---|---|---|---|---|---|
| | 1 | 2 | 3 | 4 | 5 | 6 | 7 |
| Rubber Load carrying cords Tooth cloth | EPDM/ NR/ SBR ECG-150-3/0 RFL treatment only | EPDM/ NR/ SBR ECG-150-3/0 RFL treatment only | EPDM/ BR/ SBR ECG-150-3/0 RFL treatment only | EPDM/NR ECG-150-3/0 RFL treatment only | EPDM/ SBR ECG-150-3/0 RFL treatment only | EPDM/BR ECG-150-3/0 RFL treatment only | EPDM/NR/ BR/SBR |
| Friction coefficient μ | | | | | | | |
| 25° C | 1.32 | 1.40 | 1.35 | 1.34 | 1.35 | 1.37 | 1.40 |
| 5° C | 1.32 | 1.40 | 1.35 | 1.34 | 1.35 | 1.36 | 1.39 |
| - 35° C | 1.30 | 1.35 | 1.32 | 1.30 | 1.30 | 1.33 | 1.36 |
| Gayman twist test (°C) | | | | | | | |
| 22.5° C | 169 | 165 | 165 | - | - | - | - |
| 0° C | 167 | 163 | 162 | - | - | - | - |
| - 20° C | 164 | 162 | 159 | - | - | - | - |
| - 30° C | 161 | 160 | 158 | - | - | - | - |

TABLE 3 (continued)

| | Embodiment | | | | | | |
|---|---|---|---|---|---|---|---|
| | 1 | 2 | 3 | 4 | 5 | 6 | 7 |
| Rubber Load carrying cords Tooth cloth | EPDM/ NR/ SBR ECG-150-3/0 RFL treatment only | EPDM/ NR/ SBR ECG-150-3/0 RFL treatment only | EPDM/ BR/ SBR ECG-150-3/0 RFL treatment only | EPDM/NR ECG-150-3/0 RFL treatment only | EPDM/ SBR ECG-150-3/0 RFL treatment only | EPDM/BR ECG-150-3/0 RFL treatment only | EPDM/NR/ BR/SBR |
| Embrittlement temp. (°C) | -54 | -52 | -65 | - | - | - | - |
| Ozone resistance 50 pphm 20% extension | 240h no cracking | 240h no cracking | 240h no cracking | 240h no cracking | 240h no cracking | 240h no cracking | 240h no cracking |
| Electrical resistance ($\Omega$) | $5 \times 10^6$ | $1 \times 10^6$ | - | - | - | - | - |
| Tackiness | a little | a little | None | - | - | - | - |

Environmental Temperature and Coefficient of Friction Test

A card was placed on a support table. The belt was laid so that the back/outside surface of the belt faced the card. A load (W) of 1.0 kgf was applied to the belt. The load was connected to a spring scale fixed to the support table. The belt was advanced at a speed of 300 mm/min. The load (F) when the belt started to slip on the card was determined. The coefficient of friction was calculated as F/W. The measurements were taken with a temperature variation of -25°C to 25°C.

Gayman Twist Test

This test was carried out in accordance with JISK6231.

Ozone Deterioration Test

This test was carried out in accordance with JISK6301.

Splash Check Test of Rubber Powder After Running

The belt was mounted on a two shaft running test machine having two pulleys, each with 90 teeth. The belt was run for 30 hours in an environment at a temperature of 25°C at a driving pulley speed of 9,000 rpm, with a load of 66.2W on the driven pulley, and with an initial belt tension of 1.0 kg. The presence or absence of rubber powder splashed from the belt teeth surfaces after 30 hours of running was visually checked.

Tackiness Resistance Test

Ethanol was soaked into a nylon canvas cloth. The nylon canvas cloth was placed on a moving table. The outside surface of the belt was placed against the canvas and a 5 kg, weight in turn placed on the belt. The table was moved reciprocably 50 times a distance of 40 mm. The speed of movement was 300 mm/min., with the nylon canvas cloth thereby being rubbed by the outside surface of the belt. The presence or absence of tackiness on the outside belt surface was then checked.

Water/Oil Resistance Test

Oil water was coated onto the surface of a telephone card and the resulting change in the frictional force between the belt and the telephone card was determined. The test system used was one as shown in Fig. 1, herein, having a lower belt with a width of 6.4 mm and a length of 100 mm. The upper belt had a 6.4 mm width and a 25 mm length. The belts were stacked on a table moving at a speed of 300 mm/second, with the telephone card between the belts. The telephone card was placed with its magnetic surface facing up. A 5 kg weight was placed on the top belt with a fixed spring scale connected to the weight.

An oil water composition, made up of 100 cc of ethanol and 5 g of lard added to 100 cc of artificial sweat, to make it close to the components of a person's sweat and fat, was used. The coating was carried out by completely immersing the telephone card in the oil water and drying it for 20 seconds with a fan. In the table of Fig. 3, the "number of coating times" represents the number of times that the coating was applied and dried, as described above.

During the test procedure, the telephone card coated with the oil water composition was gripped between the upper and lower belts. The upper belt was pulled and the frictional force between the belt and the telephone card was measured. The relationship between the number of coating times and the frictional force is shown in Fig. 3.

Comparative Example 1

For the cloth layer, the same untreated canvas cloth was used as for the inventive embodiment 1 and immersed in the RFL solution shown in Table 2. This treatment was carried out without any squeezing pressure applied. The cloth was then dried to produce a canvas cloth having a solid adhered amount of RFL solution of 25 weight percent.

The rubber composition shown in Table 4, below, was used for the teeth and the back/outside part of the belt. The manufacturing method including the formation of the load carrying cords, was the same as that described for inventive embodiments 1-6. However, the tooth pitch was set to 2.032 mm.

TABLE 4

| (weight parts) | | | |
|---|---|---|---|
| | Comparative Example | | |
| Compounding Agents | 1 | 2 | 3 |
| Chloroprene | 100 | 100 | - |
| Natural rubber | - | - | 70 |
| SBR 1502 | - | - | 30 |
| MgO | 4 | 4 | - |
| Acetylene black | 40 | 40 | 40 |
| Plasticizer | 15 | 35 | - |
| Stearic acid | 1 | 1 | 1 |
| ZnO | 5 | 5 | 5 |
| Napthene oil | - | - | 15 |
| Vulcanization accelerator MBTS | - | - | 1 |
| Vulcanization accelerator TMTD | - | - | 0.5 |
| Ethylene thiorea | 0.25 | 0.25 | - |
| Sulfur | 1 | 1 | 2 |

The performance characteristics of these belts are shown in Table 5, below.

TABLE 5

| | Comparative Example | | |
|---|---|---|---|
| | 1 | 2 | 3 |
| Rubber | CR | CR | NR/SBR |
| Load Carrying cords | ECG-150-3/0 | ECG-150-3/0 | ECG-150-3/0 |
| Tooth Cloth | RFL treatment only | RFL treatment only | RFL treatment only |
| Friction coefficient $\mu$ | | | |
| 25°C | 1.17 | 1.15 | -- |
| 5°C | 1.13 | 1.00 | -- |
| - 35°C | 0.98 | 0.80 | -- |

TABLE 5 (continued)

| | Comparative Example | | |
|---|---|---|---|
| | 1 | 2 | 3 |
| Gayman twist test (°C) | | | |
| 22.5°C | 169 | -- | -- |
| 0°C | 165 | -- | -- |
| - 20°C | 160 | -- | -- |
| - 30°C | 156 | -- | -- |
| Embrittlement temp. (°C) | -41 | -- | -- |
| Ozone resistance 50 pphm 20% extension | 240h no cracking | 240h no cracking | 24h C-5 |
| Electrical resistance (Ω) | -- | -- | -- |
| Tackiness | none | none | none |

Analysis of Test Results

The tests demonstrate that there is no substantial change in the frictional coefficient for the inventive belt when used in either high or low temperature environments. There is especially little decrease in the frictional coefficient at low temperatures.

It can also be seen that the inventive belt has good resistance to ozone and that the frictional force reduction of the belt when expose to oil water is small compared to the comparative example tested.

No rubber powder was found with the inventive belt after running. However, the comparative example belt had noticeable rubber powder splashed from the teeth after travel. The belt in the comparative example did have a good tooth shape after molding however, the surface adhesion rate of rubber on the belt tooth surface was approximately 10%. This adhesion rate is a value obtained by dividing the area over which the rubber is exposed through openings in the canvas cloth by the total area.

The foregoing disclosure of specific embodiments is intended to be illustrative of the broad concepts comprehended by the invention.

**Claims**

1.  A toothed belt comprising:

    a body having a length, laterally spaced sides, an inside and an outside, and defining a plurality of teeth spaced in a lengthwise direction on one of the inside and the outside of the body,
    said body defined at least in part by a rubber composition comprising at least an ethylene propylene diene monomer (EPDM) and a diene rubber selected from the group of NR ( natural rubber), BR (butadiene rubber) and SBR (styrene butadiene rubber); and
    a cloth layer on the teeth on the one of the inside and outside of the body, said cloth layer being treated with a resorcin-formalin-latex solution.

2.  The toothed belt according to claim 1 in combination with a pulley (16, 18) to engage the teeth (70), wherein the one of the inside and outside of the body (62) is defined by rubber and the cloth layer (76) prevents direct contact between the pulley (16, 18) and the rubber on the one of the inside and outside of the body.

3.  The toothed belt according to claim 2 wherein the cloth layer (76) is treated with only a resorcin-formalin-latex solution.

4.  The toothed belt according to claim 3 wherein there are a plurality of load carrying cords (77) embedded in and extending lengthwise of the body (62).

5.  The toothed belt according to claim 4 wherein the body (62) has an outside part in which the loading carrying cords (77) are embedded and the outside part of the body and teeth (70) both comprise said rubber composition.

**6.** The toothed belt according to claim 1 wherein the toothed belt (60) is a first toothed belt, there being in combination with the first toothed belt a second toothed belt that is the same as the first toothed belt and means for mounting the first and second toothed belts for movement in endless paths wherein the other of the inside and outside of the bodies on the first and second toothed belts are in close proximity to frictionally convey a flat object therebetween as the first and second toothed belts are moved in the endless paths.

**7.** The toothed belt according to claim 1 wherein the rubber composition comprises ethylidene norbornane and the EPDM has an iodine value of at least 10.

**8.** The toothed belt according to claim 1 wherein the cloth layer (76) comprises 30-50 wt. percent of solid resorcin-formalin-latex solution.

**9.** The toothed belt according to claim 1 wherein the rubber composition comprises 20-70 weight parts of EPDM.

**10.** The toothed belt according to claim 1 wherein the rubber composition comprises 25-50 weight parts of EPDM.

**11.** The toothed belt according to claim 7 wherein the EPDM has an iodine value of at least 15.

**12.** The toothed belt according to claim 7 wherein the EPDM has an iodine value of at least 20.

**13.** The toothed belt according to claim 1 wherein the rubber composition is formed using a compounding agent comprising at least one of a) carbon block, b) zinc white, c) stearic acid, d) a plasticizer, and e) an antioxidant.

**14.** The toothed belt according to claim 1 wherein the rubber composition is formed using a vulcanizing agent that is at least one of sulfur and an organic peroxide.

**15.** The toothed belt according to claim 4 wherein the load carrying cords (77) comprise 5-9 filaments of at least one of E glass and high strength glass treated with a protective agent.

**16.** The toothed belt according to claim 15 wherein the protective agent comprises at least one of a rubber composition and an RFL solution.

**17.** The toothed belt according to claim 4 wherein the load carrying cords (77) comprise twisted 0.50-2.5 denier filaments of para aramid fiber treated with an adhesive comprising at least one of a) an RFL solution, b) an epoxy solution, and c) an isocyanate solution with a rubber composition.

**18.** The toothed belt according to claim 1 wherein the cloth layer (76) comprises at least one of 6 nylon, 6,6 nylon, polyester, and aramid fiber.

**19.** The toothed belt according to claim 18 wherein the cloth layer (76) comprises a warp and a weft and the warp and weft each comprise at least one of a filament thread and a spun thread.

**20.** The toothed belt according to claim 18 wherein the cloth layer (76) comprises a warp and a weft and the weft comprises at least one of woolie nylon thread and urethane elastic thread.

**21.** The toothed belt according to claim 1 wherein the cloth layer (76) comprises one of a plain weave, twill weave, and satin weave.

**Patentansprüche**

**1.** Zahnriemen, umfassend:

einen Körper, der eine Länge, in lateralem Abstand angeordnete Seiten, eine Innenseite und eine Aüßenseite aufweist und der eine Vielzahl von Zähnen definiert, die in Längsrichtung auf der Innenseite und/oder der Außenseite des Körpers in Abstand voneinander angeordnet sind,

wobei der Körper zumindest teilweise durch eine Kautschukzusammensetzung definiert ist, die mindestens ein Ethylenpropylendienmonomer (EPDM) und einen Dienkautschuk umfaßt, der ausgewählt ist aus der Gruppe bestehend aus NR (Naturkautschuk), BR (Butadienkautschuk) und SBR (Styrolbutadienkautschuk, und eine Gewebeschicht, die auf den auf der Innenseite und/oder der Außenseite des Körpers liegenden Zähnen angeordnet ist, wobei die Gewebeschicht mit einer Resorcin-Formalin-Latex-Lösung behandelt wurde.

2. Zahnriemen nach Anspruch 1, der mit einer Riemenscheibe (16, 18) zum Eingriff in die Zähne (70) kombiniert ist, wobei die Innenseite und/oder Außenseite des Körpers (62) durch Kautschuk definiert ist und die Gewebeschicht (76) einen direkten Kontakt zwischen der Riemenscheibe (16, 18) und dem Kautschuk auf der Innenseite und/ oder Außenseite des Körpers verhindert.

3. Zahnriemen nach Anspruch 2, wobei die Gewebeschicht (76) lediglich mit einer Resorcin-Formalin-Latex-Lösung behandelt ist.

4. Zahnriemen nach Anspruch 3, wobei eine Vielzahl von lastaufnehmenden Strängen (77) in den Körper (62) eingebettet ist und sich längs aus diesem erstreckt.

5. Zahnriemen nach Anspruch 4, wobei der Körper (62) einen äüßeren Teil aufweist, in dem die lastaufnehmenden Stränge (77) eingebettet sind und sowohl der äußere Teil des Körpers als auch die Zähne (70) die Kautschukzusammensetzung umfassen.

6. Zahnriemen nach Anspruch 1, wobei der Zahnriemen (60) ein erster Zahnriemen ist, und wobei in Kombination mit dem ersten Zahnriemen ein zweiter Zahnriemen vorliegt, der derselbe ist wie der erste Zahnriemen, und Mittel zum Anbringen des ersten und zweiten Zahnriemens zur Bewegung in Endlosbändern vorliegen, wobei die anderen Innenseiten und Außenseiten des Körpers auf dem ersten und zweiten Zahnriemen eng benachbart sind, um ein sich dazwischen befindendes flaches Objekt mittels Friktion zu befördern, wenn der erste und zweite Zahnriemen in dem Endlosband bewegt werden.

7. Zahnriemen nach Anspruch 1, wobei die Kautschukzusammensetzung Ethylidennorbonan umfaßt und das EPDM eine Iodzahl von mindestens 10 aufweist.

8. Zahnriemen nach Anspruch 1, wobei die Gewebeschicht (76) 30-50 Gew.-% feste Resorcin-Formalin-Latex-Lösung umfaßt.

9. Zahnriemen nach Anspruch 1, wobei die Kautschukzusammensetzung 20-70 Gewichtsteile EPDM umfaßt.

10. Zahnriemen nach Anspruch 1, wobei die Kautschukzusammensetzung 25-50 Gew.-% EPDM umfaßt.

11. Zahnriemen nach Anspruch 7, wobei das EPDM eine Iodzahl von mindestens 15 aufweist.

12. Zahnriemen nach Anspruch 7, wobei das EPDM eine Iodzahl von mindestens 20 aufweist.

13. Zahnriemen nach Anspruch 1, wobei die Kautschukzusammensetzung gebildet wird unter Verwendung eines Kompoundiermittels, das mindestens eine der folgenden Substanzen umfaßt: a) Ruß, b) Zinkweiß, c) Stearinsäure, d) einen Weichmacher und e) ein Antioxidationsmittel.

14. Zahnriemen nach Anspruch 1, wobei die Kautschukzusammensetzung unter Verwendung eines Vulkanisationsmittels gebildet wird, das Schwefel und/oder organisches Peroxid umfaßt.

15. Zahnriemen nach Anspruch 4, wobei die lastaufnehmenden Stränge (77) 5-9 Filamente E-Glas und/oder hochfestes Glas umfassen, das mit einem Schutzmittel behandelt ist.

16. Zahnriemen nach Anspruch 15, wobei das Schutzmittel eine Kautschukzusammensetzung und/oder eine RFL-Lösung umfaßt.

17. Zahnriemen nach Anspruch 4, wobei die lastaufnehmenden Stränge (77) getwistete Filamente mit 0,50-2,5 Denier aus Paraaramidfaser umfassen, die mit einem Adhäsiv behandelt sind, das a) eine RFL-Lösung, b) eine Epoxy-Lösung und/oder c) eine Isocyanat-Lösung mit einer Kautschukzusammensetzung umfaßt.

**18.** Zahnriemen nach Anspruch 1, wobei die Gewebeschicht (76) Nylon-6, Nylon-6,6, Polyester und/oder Aramidfaser umfaßt.

**19.** Zahnriemen nach Anspruch 18, wobei die Gewebeschicht (76) Kette und Schuß umfaßt und Kette und Schuß jeweils einen Filamentfaden und/oder ein Fasergarn umfassen.

**20.** Zahnriemen nach Anspruch 18, wobei die Gewebeschicht (76) Kette und Schuß umfaßt und der Schuß Wollnylonfaden und/oder Urethanelastikfaden umfaßt.

**21.** Zahnriemen nach Anspruch 1, wobei die Gewebeschicht (76) eine Leinwandbindung, Köperbindung und/oder Atlasbindung umfaßt.

**Revendications**

**1.** Bande transporteuse dentée comprenant :

un corps ayant une certaine longueur, des côtés latéralement espacés, une face intérieure et une face extérieure, ce corps définissant un certain nombre de dents espacées dans le sens de la longueur sur l'une ou l'autre des faces intérieure et extérieure du corps,
ce corps étant défini au moins en partie par une composition de caoutchouc comportant au moins un monomère de diène de propylèneéthylène (EPDM) et un caoutchouc de diène sélectionné dans le groupe comprenant le NR (caoutchouc naturel), le BR (caoutchouc butadiène), et le SBR (caoutchouc butadiène styrène) ; et; une couche de tissu formée sur les dents de l'une des faces intérieure et extérieure du corps, cette couche de tissu étant traitée par une solution de résorcineformaline-latex.

**2.** Bande transporteuse dentée selon la revendication 1, en combinaison avec une poulie (16, 18) destinée à venir en prise avec les dents (70),
dans laquelle
l'une de la face intérieure et de la face extérieure du corps (62) est définie par du caoutchouc, et la couche de tissu (76) empêche le contact direct entre la poulie (16, 18) et le caoutchouc sur celle ci-dessus de la face intérieure ou de la face extérieure du corps.

**3.** Bande transporteuse dentée selon la revendication 2,
dans laquelle
la couche de tissu (76) est traitée avec uniquement une solution de résorcine-formaline-latex.

**4.** Bande transporteuse dentée selon la revendication 3,
dans laquelle
un certain nombre de cordes de support de charge (77) sont noyées dans le corps (62) et s'étendent dans le sens de la longueur de celui-ci.

**5.** Bande transporteuse dentée selon la revendication 4,
dans laquelle
le corps (62) a une partie extérieure dans laquelle sont noyées les cordes de support de charge (77), et la partie extérieure du corps et des dents (70) sont toutes deux constituées de la composition de caoutchouc.

**6.** Bande transporteuse dentée selon la revendication 1,
dans laquelle
la bande dentée (60) est une première bande dentée et une seconde bande dentée est en combinaison avec la première bande dentée, cette seconde bande dentée étant identique à la première bande dentée, et des moyens servant à monter la première bande dentée et la seconde bande dentée pour qu'elles se déplacent suivant des chemins sans fin, de façon que les autres faces intérieure ou extérieure des corps sur les première et seconde bandes dentées, soient à proximité immédiate pour transporter en frottement un objet plat entre elles, lorsque la première bande dentée et la seconde bande dentée sont entraînées suivant les chemins sans fin.

**7.** Bande transporteuse dentée selon la revendication 1,
dans laquelle

la composition de caoutchouc comprend du norbomane d'éthylidène et le EPDM a une valeur en iode d'au moins 10.

**8.** Bande transporteuse dentée selon la revendication 1,
dans laquelle
la couche de tissu (76) comprend 30-50 % en poids de solution solide de résorcine-formaline-latex.

**9.** Bande transporteuse dentée selon la revendication 1,
dans laquelle
la composition de caoutchouc comprend 20-70 parties en poids d'EPDM.

**10.** Bande transporteuse dentée selon la revendication 1,
dans laquelle
la composition de caoutchouc comprend 25-50 parties en poids d'EPDM.

**11.** Bande transporteuse dentée selon la revendication 7,
dans laquelle
l'EPDM a une valeur en iode d'au moins 15.

**12.** Bande transporteuse dentée selon la revendication 7,
dans laquelle
l'EPDM a une valeur en iode d'au moins 20.

**13.** Bande transporteuse dentée selon la revendication 1,
dans laquelle
la composition de caoutchouc est formée en utilisant un agent de combinaison comprenant l'un au moins de a) du noir de carbone, b) du blanc de zinc, c) de l'acide stéarique, d) un plastifiant, et e) un antioxydant.

**14.** Bande transporteuse dentée selon la revendication 1,
dans laquelle
la composition de caoutchouc est formée en utilisant un agent de vulcanisation constitué de l'un au moins de soufre et d'un peroxyde organique.

**15.** Bande transporteuse dentée selon la revendication 4,
dans laquelle
les cordes de support de charge (77) comprennent de 5 à 9 filaments de l'un au moins d'un verre E et d'un verre à haute résistance traité par un agent de protection.

**16.** Bande transporteuse dentée selon la revendication 15,
dans laquelle
l'agent de protection contient l'une au moins d'une composition de caoutchouc et d'une solution de RFL.

**17.** Bande transporteuse dentée selon la revendication 4,
dans laquelle
les cordes de support de charge (77) sont constituées de filaments de 0,50-2,5 deniers torsadés de fibres de para-aramide, traitées par un adhésif comprenant l'un au moins de a) une solution de RFL, b) une solution d'époxyde, et c) une solution d'isocyanate avec une composition de caoutchouc.

**18.** Bande transporteuse dentée selon la revendication 1,
dans laquelle
la couche de tissu (76) est constituée de l'une au moins de fibres de Nylon 6, de Nylon 6,6, de polyester, et d'aramide.

**19.** Bande transporteuse dentée selon la revendication 18,
dans laquelle
la couche de tissu (76) comprend une chaîne et une trame, la chaîne et la trame étant constituée chacune de l'un au moins d'un fil de filament et d'un fil torsadé.

20. Bande transporteuse dentée selon la revendication 18,
dans laquelle
la couche de tissu (76) comprend une chaîne et une trame, la chaîne et la trame comprenant l'un au moins d'un
fil de Nylon laineux et d'un fil élastique d'uréthane.

21. °) Bande transporteuse dentée selon la revendication 1,
dans laquelle
la couche de tissu (76) est constituée de l'un au moins d'un tissage uni, d'un tissage croisé, et d'un tissage de satin.

FIG. 1
(PRIOR ART)

FIG. 2

FIG. 3

NUMBER OF COATING TIMES